# EUROPÄISCHE PATENTSCHRIFT

(11) **EP 3 753 675 B1**
(45) Veröffentlichungstag und Bekanntmachung des Hinweises auf die Patenterteilung: **24.11.2021**
(21) Anmeldenummer: 20175970.1
(22) Anmeldetag: 22.05.2020
(51) Int. Cl.: B24C 1/10, B23P 15/14, B23F 21/03, B23F 21/02, C21D 1/18, C21D 7/06, C21D 9/32

(54) **VERFAHREN ZUR HERSTELLUNG EINES MIT EINER VERZAHNUNG ODER PROFILIERUNG VERSEHENEN WERKSTÜCKS**
METHOD FOR MANUFACTURING A WORKPIECE PROVIDED WITH TOOTHING OR PROFILING
PROCÉDÉ DE FABRICATION D'UNE PIÈCE POURVUE D'UN ENGRENAGE OU D'UN PROFILAGE

(30) Priorität: 06.06.2019 DE 102019115294
(43) Veröffentlichungstag der Anmeldung: 23.12.2020
(73) Patentinhaber: Kapp Niles GmbH & Co. KG, 96450 Coburg (DE)
(72) Erfinder: Dr. Grinko, Sergiy, 96450 Coburg (DE)
(74) Vertreter: Gosdin, Carstensen & Partner Patentanwälte Partnerschaftgesellschaft mbB

(56) Entgegenhaltungen:
- EP-A2- 0 282 046
- CN-A- 109 027 035
- DE-A1-102015 224 644
- DE-A1-102016 005 305
- US-A1- 2017 261 068

## Beschreibung

Die Erfindung betrifft ein Verfahren zur Herstellung eines mit einer Verzahnung oder Profilierung versehenen Werkstücks, welches die Abfolge der Schritte aufweist:
a) Weichbearbeitung des Werkstücks, bei der die Verzahnung oder die Profilierung hergestellt wird;
b) Härten der hergestellten Verzahnung oder Profilierung;
c) Hartfeinbearbeitung der Verzahnung oder Profilierung, wobei die Verzahnung oder Profilierung mit einem ersten Werkzeug in Form einer Schleifschnecke, einer Schleifscheibe oder eines Honrades bearbeitet wird, wobei das Werkzeug einen Grundkörper aufweist, der einen ersten Elastizitätsmodul hat;
d) Verfestigen zumindest eines Abschnitts des Werkstücks durch Durchführung eines Strahlprozesses.

Ein derartiges Verfahren gemäß dem Oberbegriff des Anspruchs 1 ist aus dem Dokument US 2017 261 068 A bekannt.

Das genannte Verfahren wird typischerweise als Prozesskette bei der Herstellung von Verzahnungen oder Profilen eingesetzt. Es beinhaltet die zumeist vorgesehene Weichbearbeitung der Verzahnung, an die sich eine Wärmebehandlung anschließt, die die Oberfläche der Zahnflanken härtet. Hieran schließt sich die Hartfeinbearbeitung an.

Bei der Weichbearbeitung werden die Werkstücke, beispielsweise durch Fräsen, Stößen oder Schälen, vorverzahnt. Nach der Wärmebehandlung, insbesondere in Form des Einsatzhärtens, des Vergütens und des Induktionshärtens, müssen die Werkstücke nachbearbeitet werden, da sie insbesondere aufgrund des Restaufmaßes, aufgrund von Härteverzügen oder infolge einer Randschichtoxidierung, noch keine hinreichende Verzahnungs- bzw. Oberflächenqualität aufweisen. Die Hartbearbeitung erfolgt zumeist in Form einer abrasiven Bearbeitung, wobei insbesondere auf das Schleifen, das Honen oder das sog. Coronieren hingewiesen sei. Oft ist mit der Durchführung der Hartfeinbearbeitung die Prozesskette abgeschlossen, wobei die Werkstücke dann eine hinreichende Verzahnungs- bzw. Oberflächenqualität aufweisen.

Werden die geforderten Verzahnungs- bzw. Oberflächenqualitäten mit diesem Verfahren nicht erreicht, können zusätzliche Verfahren wie das Polierschleifen, das Gleitschleifen oder das Schleppschleifen eingesetzt werden. Dieser Prozessschritt schließt sich an die Hartfeinbearbeitung an.

Um die Tragfähigkeit des Fuß- bzw. Flankenbereiches der Verzahnung oder des Profils zu erhöhen, wird die Prozesskette häufig durch einen Verfahrensschritt zur Verfestigung ergänzt. Nach der Erzeugung der Fertiggeometrie durch Schleifen, Honen etc. werden die Werkstücke in diesem Falle dann mittels Verfestigungsstrahlen (z. B. Kugelstrahlen) behandelt.

In vorteilhafter Weise wird somit die Festigkeit der Verzahnung bzw. des Profils erhöht. Nachteilig ist allerdings, dass mitunter nach der Verfestigungsbehandlung die Oberflächenqualität der Verzahnung bzw. des Profils nicht mehr der gewünschten Qualität entspricht. Dies kann eine weitere Behandlung des Werkstücks erforderlich machen.

Ein solches Vorgehen wird in der DE 10 2007 035 846 A1 bei der Diskussion des Standes der Technik erwähnt (s. Absatz [0004] des Dokuments). Nach der Herstellung eines Zahnrads durch Weichbearbeitung, dem sich anschließenden Härten sowie der Hartbearbeitung ist dort das Kugelstrahlen des bearbeiteten Profils vorgesehen. Es wird auch erwähnt, dass sich ein Polieren und/oder Glasstrahlen anschließen kann, wobei zu diesen Verfahrensschritten allerdings keine nähere Aussage gemacht wird. Angestrebt wird bei dem in dem Dokument beschriebenen Verfahren vielmehr, dass das Verzahnungsprofil gar nicht verfestigt wird, sondern lediglich der Zahnfuß, so dass vorgeschlagen wird, dass jede Fußoberfläche bis zu einer ausreichenden Tiefe plastisch verformt wird, ohne die Flankenabschnitte plastisch zu verformen.

Das Schleifen oder Honen kommt an dieser Stelle nicht in Frage, da das Abtragen eines (weiteren) Aufmaßes von der Verzahnungsflanke das verfestigte Material zerspant und somit abträgt und so den Verfestigungseffekt wieder eliminiert. Um die vorliegende Oberflächenqualität zu verbessern, müssen die Flanken also mit einem sehr kleinen Abtrag bearbeitet werden, da ansonsten der Verfestigungseffekt vom Werkstück wieder teilweise oder vollständig abgetragen wird. Verwendet man dafür das Schleifen oder Honen, müssen die entsprechenden Werkzeuge sehr genau in der Verzahnungslücke positioniert bzw. ausgerichtet werden. Die Werkstücke haben zwar eine Fertiggeometrie, die geometrischen Parameter schwanken jedoch innerhalb eines Toleranzbandes. Zusätzlich kann auch der Ausrichtprozess nur mit einer beschränkten Genauigkeit (bezüglich der Symmetrie) durchgeführt werden. Das bedeutet, dass das abzuschleifende Aufmaß mindestens so groß sein muss wie die Summe aller Fehler beim Ausrichten, um die geforderte Geometrie zuverlässig zu erzeugen. In der Praxis führt das nachteilig zu einem erhöhten Abtrag und zur Eliminierung der gewünschten verfestigten Schicht.

Daher wird in diesem Falle zumeist das Gleitschleifen eingesetzt, bei dem die so behandelte Oberfläche nur noch einen Abtrag im Rauheitsbereich ohne eine Veränderung der Gesamtgeometrie erfährt. Dieses Verfahren kann gegebenenfalls auch mit chemischer Unterstützung erfolgen.

Mitunter führt allerdings auch dieses Verfahren nicht zum gewünschten Ergebnis bzw. es hat entsprechend hohe Prozesskosten zur Folge.

In der DE 10 2016 005 305 A1 wird ein Fertigungsverfahren für Zahnräder beschrieben, bei dem eine Schleifschnecke mit zwei benachbarten Bearbeitungsbereichen eingesetzt wird. Mit dem ersten Bearbeitungsbereich erfolgt das klassische Schleifen. Anschließend wird das Werkzeug in axiale Richtung geshiftet, so dass der zweite Bearbeitungsbereich zum Einsatz kommen kann. Hierbei wird allerdings der Schwenkwinkel zwischen Werkzeug und Werkstück geringfügig verändert, um ein Feinschleifen oder Polieren durchzuführen. Da durch das Feinschleifen bzw. Polieren nur noch ein minimaler Materialabtrag erfolgen soll und zudem der Schwenkwinkel lediglich geringfügig verändert wird (s. Figur 4 des Dokuments), ist die präzise Positionierung zwischen Werkstück und Werkzeug hier sehr wesentlich, so dass ein Verfahrensschritt zwischen dem Schleifen und dem Feinschleifen/Polieren nicht in Betracht kommt, der die Entnahme des Werkstücks und anschließende Neuaufnahme in die Maschine erfordern würde. Vielmehr wird für das Schleifen und das sich anschließende Feinschleifen/Polieren die gleiche Aufspannung des Werkstücks betont (s. Absätze [0028] und [0029] des Dokuments).

Der Erfindung liegt daher die **Aufgabe** zugrunde, ein gattungsgemäßes Verfahren so weiterzubilden, dass die Herstellung eines Werkstücks mit einer Verzahnung bzw. mit einem Profil weiter verbessert werden kann, wobei das Werkstück sowohl eine hohe Festigkeit als auch hinreichende Genauigkeit aufweisen soll. Das Verfahren soll darüber hinaus auch wirtschaftlich arbeiten.

Die **Lösung** dieser Aufgabe durch die Erfindung sieht vor, dass im Anschluss an obigen Schritt d) der Schritt durchgeführt wird:
e) Nochmalige Hartfeinbearbeitung der Verzahnung oder Profilierung, wobei die Verzahnung oder Profilierung mit einem zweiten Werkzeug in Form einer Schleifschnecke, einer Schleifscheibe, eines Schleifscheibensatzes oder eines Honrades bearbeitet wird, wobei das zweite Werkzeug einen Grundkörper aufweist, der einen zweiten Elastizitätsmodul hat, der höchstens 33 %, vorzugsweise höchstens 25 %, des ersten Elastizitätsmoduls beträgt, und wobei das zweite Werkzeug einen Grundkörper aus einem Kunststoff oder aus Gummi aufweist.

Bevorzugt beträgt der zweite Elastizitätsmodul sogar höchstens 10 % des ersten Elastizitätsmoduls, besonders bevorzugt höchstens 5 % des ersten Elastizitätsmoduls.

Das gemäß obigem Schritt c) verwendete erste Werkzeug weist bevorzugt einen Grundkörper aus Stahl oder einen solchen aus Keramik-Material mit eingelagertem Korund auf.

Das gemäß obigem Schritt c) verwendete erste Werkzeug ist nach einer besonders bevorzugten Ausgestaltung der Erfindung eine Schleifschnecke, die gemäß der zu bearbeitenden Verzahnung oder Profilierung profiliert oder abgerichtet ist.

Eine andere Lösung sieht vor, dass das gemäß obigem Schritt c) verwendete erste Werkzeug eine aus Stahl bestehende Schleifscheibe oder ein Schleifscheibensatz ist, die oder der mit abrasivem Material belegt ist.

Das gemäß obigem Schritt e) verwendete zweite Werkzeug weist bevorzugt einen Grundkörper aus Polyurethan auf.

Das gemäß obigem Schritt e) verwendete zweite Werkzeug weist besonders bevorzugt einen Grundkörper auf, in den abrasives Material eingelagert ist und der gemäß der zu bearbeitenden Verzahnung oder Profilierung ausgeformt ist.

Der gemäß obigem Schritt d) durchgeführte Strahlprozess ist bevorzugt ein Kugelstrahlprozess, insbesondere unter Verwendung von Metallkugeln oder Glaskugeln.

Nach obigem Schritt d) und vor obigem Schritt e) kann das Werkstück gereinigt, insbesondere gewaschen, werden.

Das vorgeschlagene Verfahren stellt somit eine Prozesskette insbesondere zur Zahnflankenbearbeitung mit hoher Oberflächenqualität bereit. Die Prozesskette umfasst insbesondere für die Hartfeinbearbeitung der Zahnflanken einer Verzahnung mit hoher Oberflächenqualität das dem üblichen Verzahnungsschleifen (bzw. Verzahnungshonen) und dem Verfestigungsstrahlen nachgelagerte Polierschleifen mit einem Werkzeug, dessen Grundkörper relativ weich und somit nachgiebig ist.

Mit der vorgeschlagenen Vorgehensweise ist eine neuartige Prozesskette bereitgestellt, wobei das Gleitschleifen entbehrlich wird; dieser Prozessschritt wird vielmehr durch ein Polierschleifverfahren mit einem schleifähnlichen Werkzeug (insbesondere mit einer Schleifschnecke oder einer Schleifscheibe) durchgeführt, wobei besagtes Werkzeug eine Basis bzw. einen Grundkörper aus relativ elastischem Material aufweist, wobei insbesondere an Polyurethan, oder an ein Material, welches Polyurethan aufweist, oder an Gummi gedacht ist.

Der Einsatz eines solchen (zweiten) Werkzeugs, welches als Polierwerkzeug fungiert und welches relativ elastisch ausgeführt ist, hat folgende Vorteile zur Folge:
Die Bearbeitung mit einem solchen Werkzeug erfolgt durch die (innere) Vorspannung des Werkzeuges in der Verzahnungs-Lücke. Dies ermöglicht es, alle möglicherweise noch vorhandenen Fehler der Werkstückgeometrie oder des Ausrichtprozesses dank des flexiblen Werkzeugkörpers auszugleichen.

Das abzuschleifende Aufmaß liegt nur noch im Bereich der Oberflächenqualität. Somit ist sichergestellt, dass die verfestigte Materialschicht auf der Zahnflanke nicht beschädigt wird bzw. auf dieser verbleibt.

Die Werkstücke gehen nach der Verfestigungsbehandlung entweder direkt zur Polierschleifbearbeitung (mit dem zweiten Werkzeug) oder werden erst noch gewaschen bzw. gereinigt. Die Polierschleifbearbeitung (mittels des zweiten Werkzeugs) erfolgt bevorzugt entweder mittels einer Wälzschnecke mit elastischer Bindung oder mittels einer Profilscheibe bzw. einem Profilscheibensatz mit elastischer Bindung.

Die Bearbeitung (gemäß obigem Schritt c) und e)) kann auch mit einem kombinierten Werkzeug erfolgen, wobei mindestens ein Bereich bzw. ein Teil des Werkzeugs die elastische Bindung hat; es handelt sich dann also um ein Kombinationswerkzeug, mit dem zunächst die Hartfeinbearbeitung gemäß obigem Schritt c) und nachfolgend das Polierschleifen gemäß obigem Schritt e) durchgeführt werden kann, wobei jeweils unterschiedliche Abschnitte des Werkzeugs zum Einsatz kommen.

Der E-Modul, auf den bei der vorliegenden Erfindung Bezug genommen wird, ist als solcher hinlänglich bekannt, so dass er hier nicht weiter beschrieben werden muss. Er ist ein Materialkennwert, der bei linear-elastischem Verhalten den proportionalen Zusammenhang zwischen aufgebrachter Spannung und erzielte Dehnung bei der Verformung eines festen Körpers beschreibt. Er wird in N/m² bzw. in N/mm² angegeben.

In der Zeichnung ist ein Ausführungsbeispiel der Erfindung dargestellt. Es zeigen:
- Fig. 1: in perspektivischer Darstellung ein zu bearbeitendes Werkstück in Form eines Zahnrad, welches mit einem schneckenförmigen Werkzeug poliergeschliffen wird, und
- Fig. 2: ein Ablaufdiagramm für das erfindungsgemäße Verfahren.

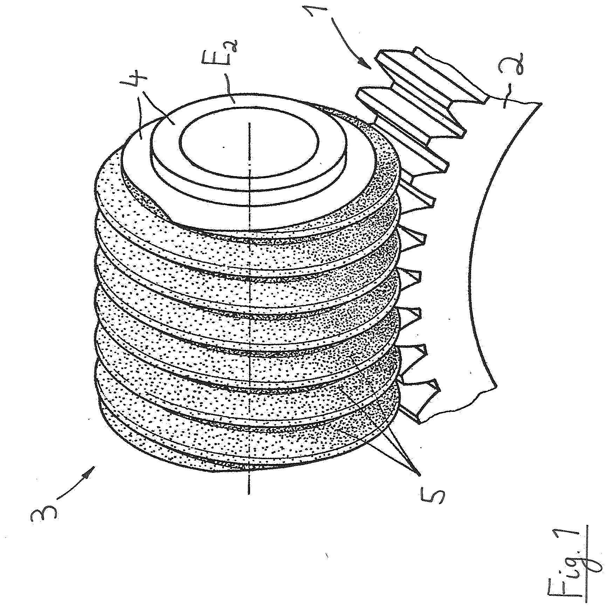

In Fig. 1 ist ein Teilschritt des vorgeschlagenen Fertigungsprozesses zur Herstellung eines Werkstücks 2 in Form eines Zahnrads skizziert; das Werkstück 2 weist eine Verzahnung 1 auf, die mit hoher geometrischer Präzision und hoher Oberflächenqualität zu fertigen ist.

Dargestellt ist der Schritt des Polierschleifens mittels eines Werkzeugs 3 in Form einer Schleifschnecke. Die Schleifschnecke 3 weist einen Grundkörper 4 auf, der im Ausführungsbeispiel aus Polyurethan besteht. In das Material des Grundkörpers 4 sind Abrasivpartikel eingelagert, so dass sich an der Oberfläche der Schleifschnecke 3 abrasive Flächen 5 bilden, die zum spanenden Bearbeiten der Verzahnung 1 dienen.

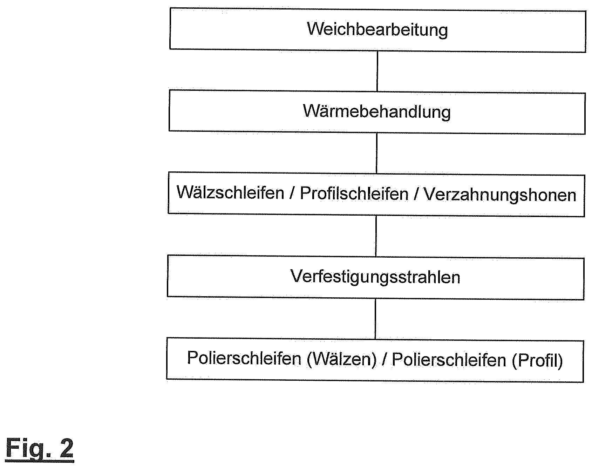

Der gesamte Fertigungsvorgang des Werkstücks 2 ergibt sich aus Figur 2.

Hiernach ist zunächst die Weichbearbeitung vorgesehen, bei der in einen metallischen Grundkörper die Verzahnung 1 eingearbeitet wird. Dies kann beispielsweise durch Wälzfräsen erfolgen.

An die Weichbearbeitung schließt sich die Wärmebehandlung an, mit der die Zahnflanken gehärtet werden.

Ist das Werkstück 2 gehärtet, ist der nächste Bearbeitungsschritt die Hartfeinbearbeitung, wobei in Figur 2 drei alternative Möglichkeiten genannt sind, nämlich das Wälzschleifen, das Profilschleifen und das Verzahnungshonen. Wird das Wälzschleifen mit einer Schleifschnecke vorgesehen, ergibt sich hierbei dieselbe Situation, wie sie in Figur 1 dargestellt ist, wobei allerdings ein weitgehend starres Werkzeug 3 eingesetzt wird, welches beim Auftreten der Kräfte während des Schleifen praktisch keine Verformungen erfährt. Hierzu wird als Schleifschnecke beispielsweise ein aus Keramik bestehender Grundkörper 4 eingesetzt, in den Korund-Körner eingelagert sind, wobei die Schleifschnecke durch einen Abrichtvorgang mit den benötigten abrasiven Flächen 5 versehen wird. Genauso ist auch der Einsatz eines Stahlgrundkörper-Werkzeugs möglich, der an der Oberfläche mit Abrasivmaterial beschichtet wird, um die abrasiven Flächen 5 bereitzustellen.

Aus Figur 2 ergibt sich weiterhin, dass nach dem Hartfeinbearbeiten ein Verfestigungsstrahlen erfolgt. Hierbei werden Bereiche des Werkstücks bzw. der Verzahnung durch Kugelstrahlen verfestigt. Hierbei werden die zu verfestigenden Bereiche mit Kugeln beispielsweise aus Gussstahl, Drahtkorn, Keramik oder Glas beschossen, so dass sich die Oberfläche verfestigt.

Im Anschluss an das Verfestigen erfolgt dann das oben bereits beschriebene Polierschleifen, welches im Ausführungsbeispiel mit einer Schleifschnecke 3 durchgeführt wird, was aber beispielsweise auch mit einer Profilschleifscheibe erfolgen kann.

Wesentlich ist bei dieser nochmaligen Hartfeinbearbeitung der Verzahnung 1, dass das Werkzeug 3, im Ausführungsbeispiel also die Schleifschnecke, einen Grundkörper 4 aufweist, dessen E-Modul wesentlich geringer ist als der E-Modul des Grundkörpers des Werkzeugs, mit dem das Wälzschleifen, das Profilschleifen bzw. das Verzahnungshonen nach der Wärmebehandlung erfolgte.

Hiernach wird beispielsweise das Schleifen nach der Wärmebehandlung mit einer Schleifschnecke durchgeführt, die einen Grundkörper aus Keramik-material aufweist, in welches Korundkörner eingelagert sind, wobei der Grundkörper gemäß der benötigten Form abgerichtet und so mit den abrasiven Flächen 5 versehen wurde. Der E-Modul für Keramik mit eingelagertem Korund liegt im Bereich zwischen 18.000 und 32.500 N/mm². Alternativ kann der Grundkörper auch aus Stahl bestehen und die Flächen 5 aufweisen, die mit abrasivem Material beschichtet sind; in diesem Falle liegt der E-Modul bei 210.000 N/mm².

Demgegenüber wird für das Polierschleifen das in Figur 1 dargestellte Werkzeug 3 eingesetzt, dessen Grundkörper 4 beispielsweise aus Polyurethan besteht, in welches Abrasivpartikel eingelagert sind. Nach der Profilierung des Werkzeugs 3 in der in Figur 1 dargestellten Form (beispielsweise durch Vergießen des mit Abrasivpartikeln versetzten Polyurethans in eine entsprechende Form) liegen somit gleichermaßen abrasive Flächen 5 vor. Der E-Modul liegt hier beispielsweise bei 3.500 N/mm². Als Beispiel für ein für die vorliegende Erfindung brauchbares Material sei "ARTIFEX" der ARTIFEX Dr. Lohmann GmbH & Co. KG, Kaltenkirchen, DE, genannt.

Somit ergibt sich, dass der E-Modul E₁ des ersten Werkzeugs, welches für die Hartfeinbearbeitung nach der Wärmebehandlung zum Einsatz kommt, wesentlich größer ist als der E-Modul E₂ des Werkzeugs, welches für das Polierschleifen nach dem Verfestigungsstrahlen eingesetzt wird. Das Verhältnis der E-Moduln beträgt mindestens 3 : 1, kann jedoch auch noch deutlich größer sein.

Das beim Polierschleifen eingesetzte Werkzeug ist also relativ elastisch und passt sich der vorgefertigten Form der Verzahnung 1 an, ohne relevante Teile des verfestigten Materials abzutragen.

### Bezugszeichenliste:

- 1: Verzahnung (Profilierung)
- 2: Werkstück
- 3: Werkzeug
- 4: Grundkörper
- 5: abrasive Fläche

- E₁: erster Elastizitätsmodul
- E₂: zweiter Elastizitätsmodul

## Patentansprüche

1. Verfahren zur Herstellung eines mit einer Verzahnung (1) oder Profilierung versehenen Werkstücks (2), welches die Abfolge der Schritte aufweist:
a) Weichbearbeitung des Werkstücks (2), bei der die Verzahnung (1) oder die Profilierung hergestellt wird;
b) Härten der hergestellten Verzahnung (1) oder Profilierung;
c) Hartfeinbearbeitung der Verzahnung (1) oder Profilierung, wobei die Verzahnung (1) oder Profilierung mit einem ersten Werkzeug in Form einer Schleifschnecke, einer Schleifscheibe oder eines Honrades bearbeitet wird, wobei das Werkzeug einen Grundkörper aufweist, der einen ersten Elastizitätsmodul (E₁) hat; und
d) Verfestigen zumindest eines Abschnitts des Werkstücks (2) durch Durchführung eines Strahlprozesses,
**dadurch gekennzeichnet dass**:
e) im Anschluss an Schritt d): das Verfahren nochmalige Hartfeinbearbeitung der Verzahnung (1) oder Profilierung aufweist, wobei die Verzahnung (1) oder Profilierung mit einem zweiten Werkzeug (3) in Form einer Schleifschnecke, einer Schleifscheibe, eines Schleifscheibensatzes oder eines Honrades bearbeitet wird, wobei das zweite Werkzeug (3) einen Grundkörper (4) aufweist, der einen zweiten Elastizitätsmodul (E₂) hat, der höchstens 33 % des ersten Elastizitätsmoduls (E₁) beträgt, und wobei das zweite Werkzeug (3) einen Grundkörper (4) aus einem Kunststoff oder aus Gummi aufweist.

2. Verfahren nach Anspruch 1, **dadurch gekennzeichnet, dass** der zweite Elastizitätsmodul (E₂) höchstens 10 % des ersten Elastizitätsmoduls (E₁) beträgt, bevorzugt höchstens 5 % des ersten Elastizitätsmoduls (E₁).

3. Verfahren nach Anspruch 1 oder 2, **dadurch gekennzeichnet, dass** das gemäß Schritt c) von Anspruch 1 verwendete erste Werkzeug einen Grundkörper aus Stahl oder aus Keramik-Material mit eingelagertem Korund aufweist.

4. Verfahren nach Anspruch 3, **dadurch gekennzeichnet, dass** das gemäß Schritt c) von Anspruch 1 verwendete erste Werkzeug eine Schleifschnecke ist, die gemäß der zu bearbeitenden Verzahnung oder Profilierung profiliert oder abgerichtet ist.

5. Verfahren nach einem der Ansprüche 1 bis 3, **dadurch gekennzeichnet, dass** das gemäß Schritt c) von Anspruch 1 verwendete erste Werkzeug eine aus Stahl bestehende Schleifscheibe oder ein Schleifscheibensatz ist, die oder der mit abrasivem Material belegt ist.

6. Verfahren nach einem der Ansprüche 1 bis 5, **dadurch gekennzeichnet, dass** das gemäß Schritt e) von Anspruch 1 verwendete zweite Werkzeug (3) einen Grundkörper (4) aus Polyurethan aufweist.

7. Verfahren nach einem der Ansprüche 1 bis 6, **dadurch gekennzeichnet, dass** das gemäß Schritt e) von Anspruch 1 verwendete zweite Werkzeug (3) einen Grundkörper (4) aufweist, in den abrasives Material eingelagert ist und der gemäß der zu bearbeitenden Verzahnung oder Profilierung ausgeformt ist.

8. Verfahren nach einem der Ansprüche 1 bis 7, **dadurch gekennzeichnet, dass** der gemäß Schritt d) von Anspruch 1 durchgeführte Strahlprozess ein Kugelstrahlprozess ist, insbesondere unter Verwendung von Metallkugeln oder Glaskugeln.

9. Verfahren nach einem der Ansprüche 1 bis 8, **dadurch gekennzeichnet, dass** nach Schritt d) und vor Schritt e) von Anspruch 1 das Werkstück gereinigt, insbesondere gewaschen, wird.

## Claims

1. Method for producing a workpiece (2) provided with a toothing (1) or profiling, comprising the sequence of steps:
a) Soft machining of the workpiece (2), in which the toothing (1) or profiling is produced;
b) Hardening of the manufactured toothing (1) or profiling;
c) Hard fine machining of the toothing (1) or profiling, wherein the toothing (1) or profiling is machined with a first tool in the form of a grinding worm, a grinding wheel or a honing wheel, wherein the tool has a base body which has a first elastic modulus (E₁); and
d) Reinforcement of at least a section of the workpiece (2) by carrying out a shot blasting process,
**characterized in that**:
e) Following step d): the method comprises repeated hard fine machining of the toothing (1) or profiling, wherein the toothing (1) or profiling being machined with a second tool (3) in the form of a grinding worm, a grinding wheel, a set of grinding wheels or a honing wheel, wherein the second tool (3) having a base body (4) which has a second elastic modulus (E₂) which is at most 33 % of the first elastic modulus (E₁) and wherein the second tool (3) has a base body (4) made of a plastic or rubber.

2. Method according to claim 1, **characterized in that** the second elastic modulus (E₂) is at most 10 % of the first elastic modulus (E₁), preferably at most 5 % of the first elastic modulus (E₁).

3. Method according to claim 1 or 2, **characterized in that** the first tool used according to step c) of claim 1 has a base body of steel or of ceramic material with embedded corundum.

4. Method according to claim 3, **characterized in that** the first tool used according to step c) of claim 1 is a grinding worm which is profiled or dressed according to the toothing or profile to be machined.

5. Method according to one of claims 1 to 3, **characterized in that** the first tool used according to step c) of claim 1 is a steel grinding wheel or set of grinding wheels coated with abrasive material.

6. Method according to one of claims 1 to 5, **characterized in that** the second tool (3) used according to step e) of claim 1 has a base body (4) made of polyurethane.

7. Method according to one of claims 1 to 6, **characterized in that** the second tool (3) used according to step e) of claim 1 has a base body (4) in which abrasive material is embedded and which is shaped according to the toothing or profiling to be machined.

8. Method according to one of claims 1 to 7, **characterized in that** the shot blasting process carried out according to step d) of claim 1 is a shot peening process, in particular using metal spheres or glass spheres.

9. Method according to one of claims 1 to 8, **characterized in that** after step d) and before step e) of claim 1 the workpiece is cleaned, in particular washed.

## Revendications

1. Procédé de fabrication d'une pièce (2) munie d'une denture (1) ou d'un profilage, qui comprend la succession d'étapes suivante :
a) l'usinage à l'état mou de la pièce (2), lors duquel la denture (1) ou le profilage est fabriqué ;
b) le durcissement de la denture (1) ou du profilage fabriqué ;
c) l'usinage fin à l'état dur de la denture (1) ou du profilage, la denture (1) ou le profilage étant usiné avec un premier outil sous la forme d'une vis de meulage, d'un disque de meulage ou d'une roue de pierrage, l'outil comprenant un corps de base qui a un premier module d'élasticité (E₁) ; et
d) la consolidation d'au moins une section de la pièce (2) par réalisation d'un processus de projection, **caractérisé en ce que** :
e) à la suite de l'étape d) : le procédé comprend encore un usinage fin à l'état dur de la denture (1) ou du profilage, la denture (1) ou le profilage étant usiné avec un deuxième outil (3) sous la forme d'une vis de meulage, d'un disque de meulage, d'un ensemble de disques de meulage ou d'une roue de pierrage, le deuxième outil (3) comprenant un corps de base (4) qui a un deuxième module d'élasticité (E₂), qui est d'au plus 33 % du premier module d'élasticité (E₁), et le deuxième outil (3) comprenant un corps de base (4) en une matière plastique ou en caoutchouc.

2. Procédé selon la revendication 1, **caractérisé en ce que** le deuxième module d'élasticité (E₂) est d'au plus 10 % du premier module d'élasticité (E₁), de préférence d'au plus 5 % du premier module d'élasticité (E₁).

3. Procédé selon la revendication 1 ou 2, **caractérisé en ce que** le premier outil utilisé selon l'étape c) de la revendication 1 comprend un corps de base en acier ou en un matériau céramique à corindon incorporé.

4. Procédé selon la revendication 3, **caractérisé en ce que** le premier outil utilisé selon l'étape c) de la revendication 1 est une vis de meulage, qui est profilée ou dressée selon la denture ou le profilage à usiner.

5. Procédé selon l'une quelconque des revendications 1 à 3, **caractérisé en ce que** le premier outil utilisé selon l'étape c) de la revendication 1 est un disque de meulage constitué d'acier ou un ensemble de disques de meulage, qui est garni d'un matériau abrasif.

6. Procédé selon l'une quelconque des revendications 1 à 5, **caractérisé en ce que** le deuxième outil (3) utilisé selon l'étape e) de la revendication 1 comprend un corps de base (4) en polyuréthane.

7. Procédé selon l'une quelconque des revendications 1 à 6, **caractérisé en ce que** le deuxième outil (3) utilisé selon l'étape e) de la revendication 1 comprend un corps de base (4) dans lequel un matériau abrasif est incorporé et qui est formé selon la denture ou le profilage à usiner.

8. Procédé selon l'une quelconque des revendications 1 à 7, **caractérisé en ce que** le processus de projection réalisé selon l'étape d) de la revendication 1 est un processus de grenaillage, notamment utilisant des billes métalliques ou des billes de verre.

9. Procédé selon l'une quelconque des revendications 1 à 8, **caractérisé en ce que** la pièce est nettoyée, notamment lavée, après l'étape d) et avant l'étape e) de la revendication 1.
